# EUROPÄISCHE PATENTSCHRIFT

(11) **EP 1 772 764 B1**
(45) Veröffentlichungstag und Bekanntmachung des Hinweises auf die Patenterteilung: **25.06.2008**
(21) Anmeldenummer: 06020648.9
(22) Anmeldetag: 30.09.2006
(51) Int. Cl.: G02B 21/06

(54) **Vorrichtung zur Variation und Einstellung der Durchlichtbeleuchtung für Mikroskope**
Device for varying and setting of the transmission illumination of microscopes
Dispositif pour modifier et régler l'éclairage par transmission des microscopes

(30) Priorität: 05.10.2005 DE 102005047593
(43) Veröffentlichungstag der Anmeldung: 11.04.2007
(73) Patentinhaber: Carl Zeiss MicroImaging GmbH, 07745 Jena (DE)
(72) Erfinder: Knoblich, Johannes, 07747 Jena (DE); Hein, Detlef, 37083 Göttingen (DE); Kaufhold, Tobias, 07749 Jena (DE)

(56) Entgegenhaltungen:
- EP-A- 1 445 635
- EP-A1- 0 088 985
- EP-A1- 0 119 857
- EP-A1- 1 207 415
- WO-A-96/36897
- DE-A1- 19 644 662
- JP-A- 2001 208 977
- JP-A- 2003 005 082
- US-A- 4 455 593
- US-A- 4 640 589
- US-A- 5 684 627
- US-A1- 2004 156 109

## Beschreibung

Die vorliegende Erfindung betrifft eine Vorrichtung zur Variation und Einstellung der Durchlichtbeleuchtung für Mikroskope, insbesondere hinsichtlich der zahlreichen, verschiedenen Beleuchtungssituationen.

Nach dem Stand der Technik sind neben der klassischen Durchlicht-Hellfeld-Beleuchtung, die das mehr oder weniger gerichtete Beleuchtungslicht über das Objekt direkt in das abbildende System von Mikroskopen einkoppelt, auch Lösungen zur Realisierung schiefer Beleuchtungen bekannt. Dies kann im einfachsten Fall durch das Kippen und/oder Schieben eines zur Strahlumlenkung verwendeten Spiegels realisiert werden. Durch die schiefe und/oder einseitige Beleuchtung ist eine bessere Kontrastierung möglich.

Im Durchlicht-Illuminator C-DSD 230 der Firma Nikon wird für eine verbesserte Kontrastierung eine Blende direkt auf einem Umlenkspiegel verschoben. Zur Anpassung der reinen Durchlicht-Hellfeld-Beleuchtung an die unterschiedlichen Sehfelder, die hauptsächlich von der eingestellten Vergrößerung und den benutzten Objektiven abhängen, kann in vielen Ausführungsformen von Durchlicht-Beleuchtungen zwischen verschiedenen Anpassoptiken umgeschaltet werden.

Weitere Durchlichtbeleuchtungsvorrichtungen sind aus dem Druckschriften EP 1 207 415 A, US 5 684 627 A und DE 19 644 662 A bekannt.

Entsprechend den Benutzerwünschen soll dabei die Helligkeit einstellbar sein, wenn möglich mit Vorgabe der gewünschten Farbtemperatur. Dies wird häufig an separaten Kaltlichtquellen durchgeführt, wodurch eine unzulässige Erwärmung der Präparate und des Mikroskops vermieden werden kann.

In einigen Durchlicht-Beleuchtungen gibt es die Möglichkeit zum Einschalten verschiedener Filter und/oder Mattscheiben, zum Erreichen einer diffusen Beleuchtung.

Als alternatives Beleuchtungsverfahren kann bei komfortablen Beleuchtungseinrichtungen außerdem noch die Durchlicht-Dunkelfeld-Beleuchtung benutzt werden. Hierbei wird das Licht der Beleuchtungsquelle am Objektiv vorbei geführt, nur das am Objekt gestreute, diffus reflektierte, gebrochene und/oder gebeugte Licht wird in das Objektiv eingekoppelt.

Zur Einstellung einer bestimmten Beleuchtungssituation wird eine Vielzahl von Bedienelementen benötigt. Dies gilt besonders für komfortable Durchlicht-Beleuchtungseinrichtungen. Dabei kann eine einmal eingestellte Beleuchtungssituation nicht wieder bzw. nur mit erheblichem Aufwand reproduziert werden, da vielfach Zwischenstellungen eingestellt werden müssen und die Vielzahl der Bedienelemente die Übersicht sehr erschwert.

Einige der Bedienelemente müssen dabei in bestimmter Art und Weise kombiniert werden, um sinnvolle Beleuchtungssituationen zu ermöglichen. Diese Kombinationen sind manuell vom Benutzer einzustellen. Das nötige Wissen über die sinnvollen Kombinationen ist besonders bei Benutzern, die selten mit dem betreffenden Mikroskop arbeiten, nicht vorhanden bzw. nicht ohne zusätzlichen Aufwand verfügbar.

Außerdem ist die Anordnung der Bedienelemente häufig ergonomisch ungünstig, wodurch Bedienbarkeit und Übersichtlichkeit zusätzlich verschlechtert werden. Die Vielzahl bewegbarer Bedienelemente bedingt zudem eine kostenintensive Konstruktion des Stativfußes. Trotz der Vielzahl von Durchbrüchen muss die Stabilität erhalten bleiben. Außerdem ist zu verhindern, dass weder Streulicht austreten, noch Flüssigkeiten oder Staub eindringen können. Um bei einem gewünschten hohen Funktionsumfang der Durchlicht-Beleuchtungseinrichtung die genannten nachteiligen Wirkungen zu vermeiden, wird ein konstruktiv hoher Aufwand betrieben, was die Fertigung extrem verteuert.

Der vorliegenden Erfindung liegt die Aufgabe zugrunde, dem Benutzer die Bedienung der Durchlicht-Beleuchtungseinrichtung durch eine ergonomische Anordnung der Bedienelemente sowie eine einfache und reproduzierbare Einstellung und/oder Änderung der Beleuchtungssituationen zu erleichtern. Die Lösung soll dabei die Einstellung von zahlreichen unterschiedlichen Beleuchtungssituationen für möglichst viele Applikationen ermöglichen und sich in das mikroskopische Gesamtsystem problemlos einbinden lassen.

Erfindungsgemäß wird die Aufgabe durch die Merkmale des unabhängigen Anspruchs 1 gelöst. Bevorzugte Weiterbildungen und Ausgestaltungen sind Gegenstand der abhängigen Ansprüche.

Die erfindungsgemäße Vorrichtung zur Variation und Einstellung der Durchlichtbeleuchtung für Mikroskope besteht aus Modulen zur Dunkelfeld-, Hellfeld- und diffusen Beleuchtung und/oder zur Anpassung des Objektfeldes, bei der eine Beleuchtungslichtquelle, die über Einrichtungen zur Dimmung und Mischung verfügt, wahlweise mit verschiedenen Modulen koppelbar ist und zur Realisierung der Einstellungen innerhalb der Module sowie zur Herstellung der gewünschten Kopplungen Stellglieder vorhanden sind, die über Bedienelemente einer Steuereinheit betätigt werden, wobei die Einstellungen innerhalb der Module sowie die realisierten Kopplungen über Sensoren erfasst und in der Steuereinheit zur Reproduktion gespeichert werden.

Die vorgeschlagene Vorrichtung ist insbesondere zur Variation und Einstellung der Durchlichtbeleuchtung bei Mikroskopen vorgesehen. Durch die Vielzahl der möglichen, vorgegebenen oder benutzerspezifischen Beleuchtungsvarianten und insbesondere durch deren Reproduzierbarkeit lässt sich die vorgeschlagene Vorrichtung in Mikroskopen für die verschiedensten Anwendungen verwenden.

Die Erfindung wird nachfolgend anhand von Ausführungsbeispielen näher beschrieben. Dazu zeigen
- Figur 1:: die erfindungsgemäße Vorrichtung zur Variation und Einstellung der Durchlichtbeleuchtung für Mikroskope
- Figur 2:: die Kombination verschiedener Module zur Realisierung einer Dunkelfeldbeleuchtung und
- Figur 3:: die Einbindung der erfinderischen Vorrichtung in ein mikroskopisches Gesamtsystem.

Die vorgeschlagene technische Vorrichtung zur Variation und Einstellung der Durchlichtbeleuchtung für Mikroskope besteht aus Modulen zur Dunkelfeld-, Hellfeld- und diffusen Beleuchtung und/oder zur Anpassung des Objektfeldes, bei der eine Beleuchtungslichtquelle wahlweise mit verschiedenen Modulen koppelbar ist und zur Realisierung der Einstellungen innerhalb der Module sowie zur Herstellung der gewünschten Kopplungen Stellglieder vorhanden sind, die über Bedienelemente einer Steuereinheit betätigt werden, wobei die Einstellungen innerhalb der Module sowie die realisierten Kopplungen erfasst und in der Steuereinheit zur Reproduktion gespeichert werden.

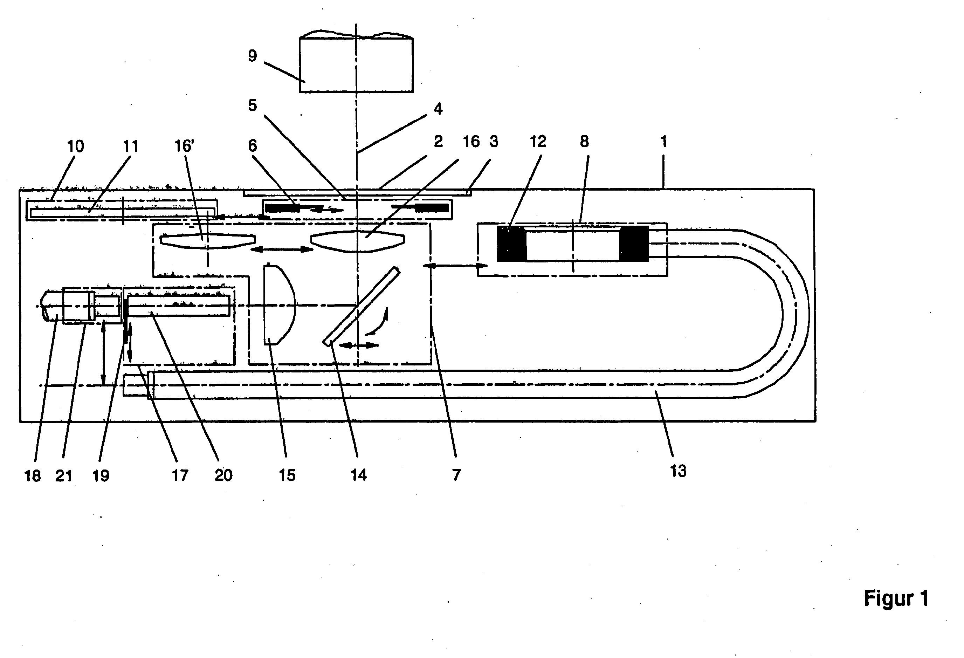

**Figur 1** zeigt hierzu die erfindungsgemäße Vorrichtung zur Variation und Einstellung der Durchlichtbeleuchtung für Mikroskope, wobei die einzelnen Module durch strichpunktierte Linien umschlossen und mögliche Bewegungen bzw. Einstellungen durch Pfeile gekennzeichnet sind.

Die erfindungsgemäße Vorrichtung **1** besteht aus mehreren Modulen zur Variation und Einstellung der Durchlichtbeleuchtung. Nahe unterhalb der Objektebene **2** bzw. des Objektträgers **3** konzentrisch zur optischen Achse **4** ist ein Irisblenden-Modul **5** angeordnet, welches eine im Durchmesser motorisch variierbare lrisblende **6** beinhaltet. Während das Irisblenden-Modul **5** in Verbindung mit dem Modul zur Hellfeldbeleuchtung **7** aufgrund der Nähe zur Objektebene **2** als Leuchtfeldblende wirkt, wird in Verbindung mit dem Modul zur Dunkelfeldbeleuchtung **8** eine optimale Anpassung der Beleuchtung an die aktuellen Abbildungsverhältnisse bzw. an das momentan benutzte Objektiv **9** ermöglicht.

Alternativ zum Irisblenden-Modul **5** lässt sich ein Modul zur diffusen Beleuchtung **10** motorisch in den Strahlengang, konzentrisch zur optischen Achse **4,** einbringen. Dieses Modul zur diffusen Beleuchtung **10** kann sowohl eine, als auch mehrere, auf einem Filterrad angeordnete Mattscheiben **11,** mit verschiedenen Streuwirkungen beinhalten.

Unterhalb dieser beiden Module **5** und **10** sind die Module zur Heilfeldbeleuchtung **7** und zur Dunkelfeldbeleuchtung **8** angeordnet, die motorisch wahlweise in den Strahlengang, konzentrisch zur optischen Achse **4** eingebracht werden können.

Das Modul zur Dunkelfeldbeleuchtung **8** besteht dabei aus einem Ringlicht **12,** welches über eine Lichtleiterverbindung **13** mit der Beleuchtungseinheit **17** verbunden werden kann.

Das Modul zur Hellfeldbeleuchtung **7** besteht aus einem in seiner Lage verschieb- und/oder drehbar angeordneten Umlenkspiegel **14,** einer Optik zur Strahlformung **15** sowie mindestens einer Optik zur Anpassung an die Größe des Objektfeldes **16** und kann mit der Beleuchtungslichtquelle verbunden werden. Hierbei ist eine zweite Optik zur Anpassung an die Größe des Objektfeldes **16'** vorgesehen, wobei wahlweise, in Abhängigkeit vom Objektfeld zwischen beiden Optiken **16** (großes Objektfeld) und **16'** kleines Objektfeld) motorisch umgeschalten werden kann. Prinzipiell wäre hier auch ein Filterrad mit mehr als zwei Optiken zur exakteren Anpassung an die Größe des Objektfeldes **16** bzw. **16'** denkbar. Durch den im Modul zur Hellfeldbeleuchtung **7** vorhandenen, in seiner Lage verschieb- und/oder drehbar angeordneten Umlenkspiegel **14** lassen sich einseitige Ausleuchtungen mit speziellen Kontrastierungseffekten erzielen.

Die Beleuchtungseinheit **17** verfügt über einen Lichtleiter **18,** der eine Verbindung zu einer separaten Kaltlichtquelle aufweist, sowie über eine Blendenanordnung **19** zur Dimmung und einen Lichtmischstab **20** zur Mischung verfügt. Die Beleuchtungseinheit **17** kann hierbei über einen Stellantrieb **21** motorisch sowohl mit dem Modul zur Hellfeldbeleuchtung **7** als auch mit dem Modul zur Dunkelfeldbeleuchtung **8** gekoppelt werden. Das abgegebene Beleuchtungslicht kann dabei hinsichtlich Helligkeit bzw. Beleuchtungsstärke durch die Blendenanordnung **19** verändert werden, indem zwischen Beleuchtungseinheit **17** und Lichtmischstab **20** eine einfache, motorisch bewegte Blendenanordnung **19** angeordnet ist, wobei der freie Querschnitt des Lichtleiters **18** kontinuierlich zunehmend abgedeckt werden kann. Der Lichtmischstab **20** sorgt über die Durchmischung des Lichtes für eine über die Fläche gleichmäßige Lichtverteilung. Prinzipiell ist es natürlich auch möglich die vorzugsweise farbneutrale Dimmung und/oder spektrale Mischung des Beleuchtungslichtes durch elektrische Beeinflussung der Kaltlichtquelle zu realisieren, wobei insbesondere auch die Farbtemperatur des Beleuchtungslichtes über die Steuereinheit eingestellt werden kann. Ferner kann die Beleuchtungseinheit **17** auch nur über eine Aufnahmevorrichtung für einen Lichtleiter **18** verfügen. Dies hat den Vorteil, dass bei Bedarf verschiedene Lichtleiter **18** eingeführt werden können, die beispielsweise mit verschiedenen Kaltlichtquellen verbunden sind.

In einer besonders vorteilhaften Ausgestaltung werden als Stellglieder Schrittmotoren verwendet, da somit auf Sensoren zur Erfassung der Einstellungen innerhalb der Module sowie der realisierten Kopplungen verzichtet werden kann. Voraussetzung dafür ist eine Initialisierung der Schrittmotoren beim Einschalten. Nachdem die Schrittmotoren dadurch ihre Ausgangsposition kennen, lassen sich in Auswertung der Schritte die jeweils aktuellen Positionen ermitteln.

Die Steuereinheit verfügt über ergonomisch angeordnete Bedienelemente und über zusätzliche Elemente zur Anzeige der momentan verwendeten Module. Die Steuereinheit ist in der Lage sowohl Standard-Beleuchtungsprogramme für bestimmte Applikationen als auch applikations- oder benutzerspezifische Beleuchtungsprogramme zu speichern und/oder alle möglichen Einstellungen anzubieten und/oder anzuzeigen. Insbesondere kann die Steuereinheit auch über Elemente zur hand-free-Bedienung verfügen.

Beispielhaft können in von Steuereinheit folgende applikationsspezifischen Beleuchtungsprogramme vorgegeben werden, die für
- spiegelnde Objekte,
- Phasen-Objekte,
- sehr kontrastreiche Objekte,
- stark absorbierende Objekte,
- eine möglichst homogene Ausleuchtung,
- eine maximale Beleuchtungsintensität,
- eine diffuse Beleuchtung,
- die Kamerabeobachtung von Objekten und
- die Fotographie besonders geeignet sind.

Von der Steuereinheit können verschieden Einstellungen zur Realisierung bestimmter Beleuchtungsprogramme zwangsweise miteinander verbunden bzw. für bestimmte Anwendungen gesperrt werden. So macht es beispielsweise keinen Sinn das Beleuchtungslicht zu dimmen, wenn die Dimmung nur für das Modul zur Hellfeldbeleuchtung **7** wirkt, aber momentan das Modul zur Dunkelfeldbeleuchtung **8** eingeschaltet ist. Derartig verbundene bzw. sich ausschließende Einstellungen lassen sich elektronisch sehr leicht erfassen und können dem Benutzer beispielsweise durch das Aufleuchten von kleinen LEDs an den Bedientasten signalisiert werden. Es ist auch möglich die momentan verwendeten Module durch farbige LEDs an der Steuereinheit, oder besonders vorteilhaft, durch Einspiegeln der entsprechenden Angaben in ein spezielles Okular anzuzeigen.

Zur Erfüllung sicherheitstechnischer Vorgaben ist es vorteilhaft, dass bei sämtlichen Variationen und Einstellungen, die eine Änderung der Bildhelligkeit nach sich ziehen, die Helligkeit der Beleuchtungseinheit auf einen für den Benutzer unschädlichen Maximalwert begrenzt wird, wobei dieser Maximalwert vorgegeben werden kann.

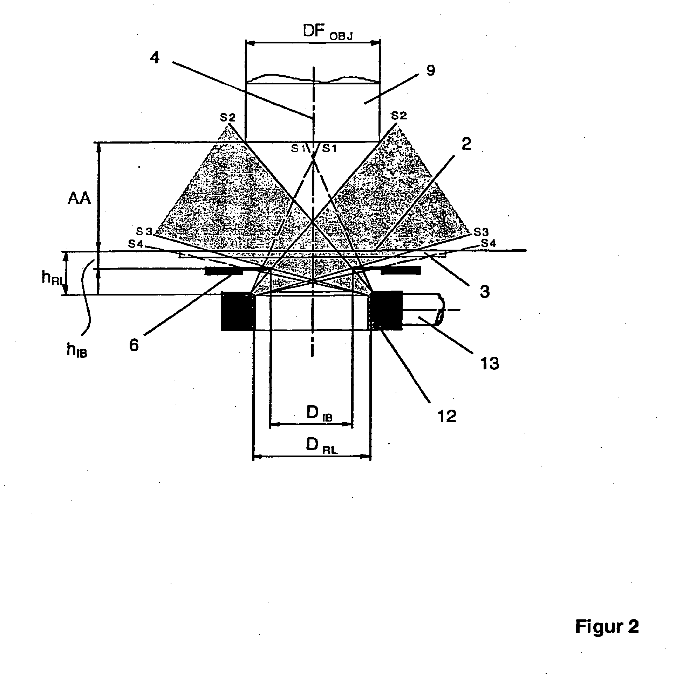

Die Kombination verschiedener Module zur Realisierung einer Dunkelfeldbeleuchtung wird in **Figur 2** dargestellt. Hierbei ist das Modul zur Dunkelfeldbeleuchtung **8** über eine Lichtleiterverbindung **13** mit der Beleuchtungseinheit **17** verbunden und wurde motorisch in den Strahlengang, konzentrisch zur optischen Achse **4** eingebracht, so dass sich das Ringlicht **12** mit seinem Austrittsspalt im Abstand h_{RL} unter der Objektebene **2** befindet. Zusätzlich ist das Irisblenden-Modul **5,** zur optimalen Anpassung der Beleuchtung an die aktuellen Abbildungsverhältnisse bzw. an das momentan benutzte Objektiv **9** konzentrisch zur optischen Achse **4** angeordnet, wobei sich die Irisblende **6** im Abstand h_{IB} unter der Objektebene **2** befindet. Die Abstrahlcharakteristik des Ringlichtes **12** wird durch die, zur optischen Achse **4** rotationssymmetrischen Strahlverläufe **S1** bis **S4** dargestellt. Ohne die Irisblende **6** würden alle Strahlen zwischen **S1** und **S2** in den freien Objektivdurchmesser **DF**_{OBJ} des Objektivs **9** eintreten, das im freien Arbeitsabstand **AA** über der Objektebene **2** positioniert ist. Dadurch würde der Kontrast deutlich verschlechtert, was in den meisten Fällen unerwünscht ist. Erst bei Verwendung des Irisblenden-Moduls **5** ist es durch die entsprechende Einstellung des Durchmessers **D**_{IB} der motorisch einstellbaren Irisblende **6** möglich, eine echte und effektive Dunkelfeldbeleuchtung zu erzeugen.

Mit den relevanten Informationen über das verwendete Objektiv, dem Arbeitsabstand **AA** und dem freien Objektivdurchmesser **DF**_{OBJ} kann die motorisierte Irisblende **6** automatisch so eingestellt werden, dass ohne die Wirkung des Objektes gerade noch kein direktes Licht des Ringlichtes **12** in das Objektiv **9** eingekoppelt wird. Über den Strahlensatz lässt sich zwar der erforderliche Durchmesser D_{IB} leicht errechnen, allerdings ist die Abstrahlcharakteristik des Ringlichts **12** nur näherungsweise bekannt, so dass die Werte für die benutzten Objektive **9** sicherheitshalber einmal empirisch ermittelt werden sollten, um sie dann in das Gesamtsystem einzugeben.

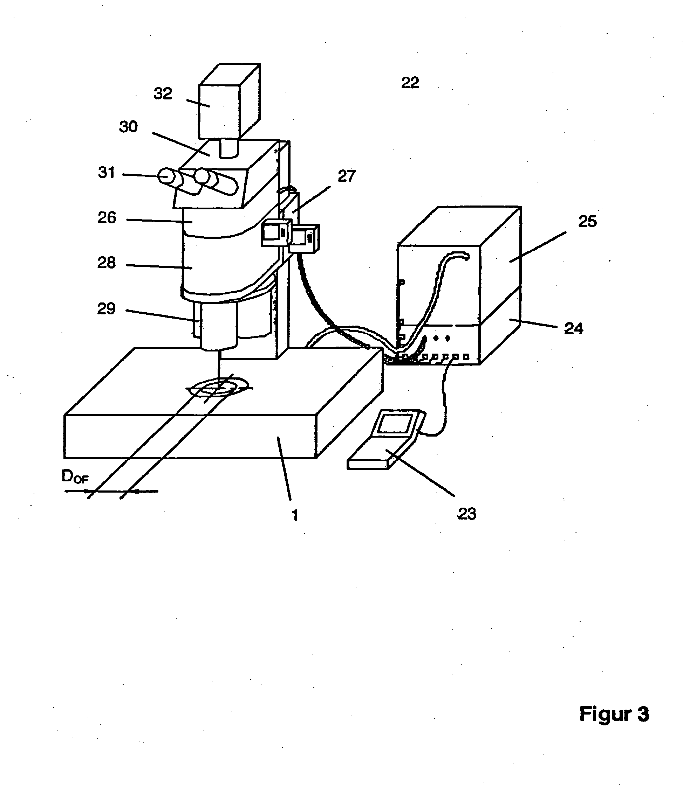

In einer weiteren vorteilhaften Ausgestaltung zeigt **Figur 3** die Einbindung der erfinderischen Vorrichtung **1** in ein mikroskopisches Gesamtsystem **22.**

Die Bedienung des mikroskopischen Gesamtsystems **22** erfolgt vorzugsweise über nur ein Bedienpult **23,** welches mit der Steuereinheit **24** zur Koordinierung aller Komponenten verbunden ist. Zur Kommunikation der einzelnen Module ist ein CAN-BUS-System vorgesehen, durch das alle motorisierten und/oder codierten Komponenten miteinander kommunizieren können. Daten können sowohl an das übergeordnete Gesamtsystem übergeben als auch von dort empfangen werden. Die einzelnen Komponenten liefern dem Gesamtsystem auch Rückmeldungen über ihren aktuellen Zustand.

Das Beleuchtungssystem des mikroskopischen Gesamtsystems **22** besteht weiterhin aus der separaten Kaltlichtquelle **25** und einem Zwischentubus für die koaxiale Auflichtbeleuchtung **26.** Das mikroskopische Gesamtsystem wird beispielsweise durch einen Fokussiertrieb **27,** einen Zoomkörper **28,** einen Objektivwechsler **29** mit drei Objektiven und den Tubus **30** mit den beiden Okularen **31** und einem Fotoausgang, auf dem eine Kamera **32** adaptiert ist, vervollständigt. Da alle einstellbaren Komponenten und Module motorisch betätigt werden können und miteinander vernetzt sind, lassen sich beliebige Mischlichtkombinationen benutzer- und/oder aufgabenspezifisch erzeugen, speichern und auch wieder exakt reproduzieren.

In einer besonders vorteilhaften, arbeitserleichternden Ausgestaltung werden Einstellungen, die eine Änderung der Beleuchtungssituation verursachen können, überprüft und bei Bedarf zur Nachregelung der aktuellen Beleuchtungsbedingungen verwendet. Dabei werden alle relevanten Informationen des Gesamtsystems ausgewertet und sinnvolle Einstellungen ohne zwangsweise Mitwirkung des Benutzers durchgeführt.

So ist es beispielsweise meist sinnvoll nur das abgebildete Sehfeld ohne Energieverlust auszuleuchten. Dazu wird aus den übermittelten Daten des kodierten Objektivwechslers **29** zum momentan verwendeten Objektiv **9,** die aktuelle Vergrößerung des Zoomkörpers **28** und des verwendeten Sehfelddurchmessers der Objektfelddurchmesser **D**_{OF} errechnet und die entsprechenden Beleuchtungsbedingungen mit Hilfe der entsprechenden Anpassoptik **16,** der Module zur Hellfeld- **7** oder Dunkelfeldbeleuchtung **8** sowie des Irisblenden-Moduls **5** eingestellt. Der verwendete Sehfelddurchmesser wird dabei entweder von den Okularen **31** oder der Kamera **32** vorgegeben. Während durch die Verwendung des lrisblenden-Moduls **5** das Streulicht reduziert und der Kontrast erhöht werden kann, dient die Anpassoptik **16** der gleichmäßigen und verlustfreie Ausleuchtung des Objektfeldes.

Außerdem ist es vorteilhaft, wenn bei der Änderung des Zoom- und/oder des Objektivfaktors und/oder der Änderung der wirksamen Größe einer ggf. vorhandenen Aperturblende die Helligkeit im Rahmen des Stellbereichs konstant bleibt. Auch dies kann durch die Auswertung der Daten des Objektivwechslers **29,** des Zoomkörpers **28** und einer vorhandenen motorisierten Aperturblende gewährleistet werden. Über die Lichtdimmung bzw. die farbneutrale Helligkeitssteuerung in der Beleuchtungseinheit **17** kann die Helligkeit nach der Anwendung eines Rechenalgorithmus wieder auf den gleichen Wert gebracht werden.

Als alternatives Verfahren lässt sich zur Ermittlung der Eingangsgröße für eine reine Konstant-Regelung der Helligkeit eine Art Belichtungsmessung am Ort des Bildes bzw. eines Zwischenbildes durchführen. Dazu kann das Zwischenbild in einem speziellen Zwischentubus oder einer verwendeten Kamera **32** verwendet werden. Da einige Bild-Empfänger nur in einem bestimmten Helligkeitsbereich zufriedenstellend arbeiten, lässt sich eine Regelung der optimalen Helligkeit durchführen, wenn der Bild-Empfänger ein zur Auswertung geeignetes Signal abgibt.

Prinzipiell sind mit der vorgeschlagenen Vorrichtung zur Variation und Einstellung der Durchlichtbeleuchtung für Mikroskope auch dynamische, zeit- und/oder aktionsgesteuerte Beleuchtungsverläufe möglich, bei denen in Abhängigkeit von der bereits verstrichenen Zeit und/oder Aktionsmeldungen spezielle Beleuchtungssituationen aufgerufen werden.

Mit der erfindungsgemäßen Vorrichtung zur Variation und Einstellung der Durchlichtbeleuchtung für Mikroskope wird eine Lösung zur Verfügung gestellt, mit der die Bedienung der Durchlicht-Beleuchtungseinrichtung durch eine ergonomische Anordnung der Bedienelemente sowie eine einfache und reproduzierbare Einstellung und/oder Änderung der Beleuchtungssituationen erleichtert wird. Dabei sind Einstellung und Speicherungen von zahlreichen unterschiedlichen Beleuchtungssituationen für möglichst viele Applikationen möglich. Die Lösung lässt sich problemlos in ein mikroskopisches Gesamtsystem einbinden und ermöglicht so eine komplette Automatisierung.

## Patentansprüche

1. Durchlichtbeleuchtungsvorrichtung für ein Mikroskop, bestehend aus
- einer Beleuchtungseinheit (17),
- Modulen zur Dunkelfeld- (8) und Hellfeldbeleuchtung (7),
- einem Irisblenden-Modul (5)(16, 16'), und
- einer Steuereinheit, wobei
in der Durchlichtbeleuchtungsvorrichtung die Beleuchtungseinheit (17) wahlweise mit dem Modul zur Dunkelfeldbeleuchtung oder mit dem Modul zur Hellfeldbeleuchtung koppelbar ist und wobei das Irisblenden-Modul (5) wahlweise in den optischen Strahlengang in Verbindung mit dem Modul zur Dunkelfeldbeleuchtung (8) zur optimalen Anpassung der Beleuchtung an die aktuellen Abbildungsverhältnisse oder in Verbindung mit dem Modul zur Hellfeldbeleuchtung (7) zur Anpassung des Objektfeldes eingebracht werden kann und zur Realisierung der Einstellungen innerhalb der Module sowie zur Herstellung der gewünschten Kopplungen Stellglieder vorhanden sind, die über Bedienelemente der Steuereinheit (24) betätigt werden, und die Einstellungen innerhalb der Module sowie die realisierten Kopplungen über Sensoren erfasst und in der Steuereinheit (24) zur Reproduktion gespeichert werden.

2. Vorrichtung nach Anspruch 1, bei der das, aus einem Ringlicht (12) bestehende, Modul zur Dunkelfeld-Beleuchtung (8) über eine Lichtleiterverbindung (13) mit der Beleuchtungslichtquelle verbunden und in den optischen Strahlengang eingebracht werden kann.

3. Vorrichtung nach Anspruch 1, bei dem eine vorzugsweise farbneutrale Dimmung und/oder spektrale Mischung des Beleuchtungslichtes durch elektrische Beeinflussung der Kaltlichtquelle (25) erfolgt.

4. Vorrichtung nach Anspruch 1, bei der als Stellglieder Schrittmotoren verwendet werden, so dass auf Sensoren zur Erfassung der Einstellungen innerhalb der Module sowie der realisierten Kopplungen verzichtet werden kann.

5. Vorrichtung nach Anspruch 1, bei der die Bedienelemente der Steuereinheit (24) ergonomisch angeordnet sind und die Steuereinheit (24) zusätzlich über Elemente zur Anzeige der momentan verwendeten Module verfügt.

6. Vorrichtung nach Anspruch 1, bei der in der Steuereinheit (24) Standard-Beleuchtungsprogramme für bestimmte Applikationen und/oder benutzerspezifische Beleuchtungsprogramme gespeichert sind.

7. Vorrichtung nach mindestens einem der Ansprüche 1 und 6, bei der die Steuereinheit (24) über Elemente zur hand-free-Bedienung verfügt.

8. Vorrichtung nach mindestens einem der Ansprüche 1, 6 und 7, bei der dem Benutzer von der Steuereinheit (24) alle möglichen Einstellungen angeboten und/oder angezeigt werden.

9. Vorrichtung nach mindestens einem der Ansprüche 1 sowie 6 bis 8, bei der bei sämtlichen Variationen und Einstellungen, die eine Änderung der Bildhelligkeit nach sich ziehen, die Helligkeit der Beleuchtungslichtquelle auf einen für den Benutzer unschädlichen Maximalwert begrenzt wird, wobei dieser Maximalwert vorgegeben werden kann.

10. Vorrichtung nach mindestens einem der vorgenannten Ansprüche, bei der Einstellungen, die eine Änderung der Durchlichtbeleuchtung verursachen können, überprüft und bei Bedarf zur Nachregelung der aktuellen Durchlichtbeleuchtung verwendet werden.

11. Vorrichtung nach mindestens einem der vorgenannten Ansprüche, bei der die Überprüfung der Einstellungen, die eine Änderung der Durchlichtbeleuchtung verursachen können, über ein CAN-Bus-System erfolgt.

## Claims

1. Transmitted-light illuminating device for a microscope, consisting of:
- an illuminating unit (17),
- modules for dark-field illumination (8) and bright-field illumination (7),
- an iris diaphragm module (5) (16, 16'), and
- a control unit, wherein
in the transmitted-light illuminating device the illuminating unit (17) can be selectively coupled with the module for dark-field illumination or with the module for bright-field illumination, and wherein the iris diaphragm module (5) can be selectively brought into communication with the module for dark-field illumination (8) in the optical beam path for the optimum adaptation of the illumination to the current imaging conditions, or into communication with the module for bright-field illumination (7) for the adaptation of the object field, and actuators are provided in order to achieve the adjustments within the modules and also to produce the desired couplings and are actuated via operating elements in the control unit (24), and the adjustments within the modules and the achieved couplings are detected by sensors and are stored in the control unit (24) for the purposes of reproduction.

2. Device as claimed in Claim 1, wherein the module for dark-field illumination (8), consisting of a ring light (12), can be connected to the illumination light source via a light conducting connection (13) and can be brought into the optical beam path.

3. Device as claimed in Claim 1, wherein a preferably colour-neutral dimming and/or spectral mixing of the illumination light is effected by electrically influencing the cold light source (25).

4. Device as claimed in Claim 1, wherein stepping motors are used as the actuators so that there is no need to dispose sensors for detecting the adjustments within the modules and the achieved couplings.

5. Device as claimed in Claim 1, wherein the operating elements in the control unit (24) are disposed in an ergonomic manner and the control unit (24) is additionally provided with elements for displaying the currently used modules.

6. Device as claimed in Claim 1, wherein standard illumination programmes for particular applications and/or user-specific illumination programmes are stored in the control unit (24).

7. Device as claimed in at least one of Claims 1 and 6, wherein the control unit (24) is provided with elements for hands-free operation.

8. Device as claimed in at least one of Claims 1, 6 and 7, wherein the control unit (24) offers and/or displays all possible adjustments to the user.

9. Device as claimed in at least one of Claims 1 and 6 to 8, wherein for all variations and adjustments which result in a change in the image brightness, the brightness of the illumination light source is limited to a maximum value which is safe for the user, wherein this maximum value can be predetermined.

10. Device as claimed in at least one of the preceding Claims, wherein adjustments which can cause a change in the transmitted-light illumination are checked and are used as required to readjust the current transmitted-light illumination.

11. Device as claimed in at least one of the preceding Claims, wherein the adjustments which can cause a change in the transmitted-light illumination are checked via a CAN bus system.

## Revendications

1. Dispositif d'éclairage par lumière transmise pour un microscope, comprenant
- une unité d'éclairage (17),
- des modules pour l'éclairage sur fond obscur (8) et l'éclairage sur fond clair (7),
- un module à diaphragme iris (5) (16, 16'), et
- une unité de commande,
l'unité d'éclairage (17) pouvant être couplée au choix avec le module pour l'éclairage sur fond obscur ou avec le module pour l'éclairage sur fond clair dans le dispositif d'éclairage par transmission et le module à diaphragme iris (5) pouvant être introduit au choix dans la trajectoire de faisceau optique en liaison avec le module pour l'éclairage sur fond obscur (8) pour l'adaptation optimale de l'éclairage aux conditions de reproduction actuelles ou en liaison avec le module pour l'éclairage sur fond clair (7) pour l'adaptation du champ d'objet et des organes de réglage étant présents pour réaliser les réglages à l'intérieur des modules et pour établir les accouplements souhaités, lesdits organes sont actionnés par des éléments d'actionnement de l'unité de commande (24), et les réglages à l'intérieur des modules et les accouplements réalisés étant enregistrés par des capteurs et étant stockés dans l'unité de commande (24) pour la reproduction.

2. Dispositif selon la revendication 1, sur lequel le module à base d'une lumière annulaire (12) pour l'éclairage sur fond obscur (8) peut être relié par une liaison à fibres optiques (13) à la source de lumière d'éclairage et introduit dans la trajectoire de faisceau optique.

3. Dispositif selon la revendication 1, sur lequel une variation de lumière de préférence neutre au niveau de la couleur et/ou un mélange spectral de la lumière d'éclairage s'effectue par une influence électrique sur la source de lumière froide (25).

4. Dispositif selon la revendication 1, sur lequel les moteurs pas à pas sont utilisés comme organes de réglage, de sorte qu'on peut renoncer à des capteurs pour la saisie des réglages à l'intérieur des modules et des accouplements réalisés.

5. Dispositif selon la revendication 1, sur lequel les éléments d'actionnement de l'unité de commande (24) sont disposés de façon ergonomique et l'unité de commande (24) dispose en supplément d'éléments pour l'affichage des modules utilisés momentanément.

6. Dispositif selon la revendication 1, sur lequel des programmes d'éclairage standard pour des applications définies et/ou des programmes d'éclairage spécifiques à l'utilisateur sont stockés dans l'unité de commande (24).

7. Dispositif selon au moins l'une quelconque des revendications 1 et 6, sur lequel l'unité de commande (24) dispose d'éléments pour la commande main libre.

8. Dispositif selon au moins l'une quelconque des revendications 1, 6 et 7, sur lequel tous les réglages possibles sont proposés et/ou affichés par l'unité de commande (24) pour l'utilisateur.

9. Dispositif selon au moins l'une quelconque des revendications 1 ainsi que 6 à 8, sur lequel, pour toutes les variations et tous les réglages qui entrainent une modification de la luminosité d'image, la luminosité de la source de lumière d'éclairage est limitée à une valeur maximale préjudiciable pour l'utilisateur, cette valeur maximale pouvant être prédéfinie.

10. Dispositif selon au moins l'une quelconque des revendications précédentes, sur lequel des réglages, qui peuvent provoquer une modification de l'éclairage par lumière transmise, sont vérifiés et sont utilisés éventuellement pour le réglage ultérieur de l'éclairage actuel par lumière transmise.

11. Dispositif selon au moins l'une quelconque des revendications précédentes, sur lequel le contrôle des réglages, qui peuvent provoquer une modification de l'éclairage par lumière transmise, s'effectue au moyen d'un système de CAN-Bus.
